# EUROPEAN PATENT APPLICATION

(11) **EP 3 509 023 A1**
(43) Date of publication of application: **10.07.2019**
(21) Application number: 17845918.6
(22) Date of filing: 14.07.2017
(51) Int. Cl.: G06Q 10/08, B65G 61/00

(54) **MERCHANDISE SEARCH PROGRAM AND METHOD IN MERCHANDISE SHIPPING MANAGEMENT SYSTEM**

(30) Priority: 31.08.2016 JP 2016169435
(71) Applicant: Yodobashi Camera Co., Ltd., Shinjuku-ku, Tokyo 1698585 (JP); Fujisawa, Kazunori, Shibuya-ku, Tokyo 150-0046 (JP)
(72) Inventor: FUJISAWA Kazunori, Tokyo 169-8585 (JP)
(74) Representative: Grünecker Patent- und Rechtsanwälte PartG mbB
(86) International application number: PCT/JP2017/025757
(87) International publication number: WO 2018/042908

(57) **Abstract**

An improved goods search method and the like are provided. A computer program to be executed, for searching for goods, in a goods shipment management system includes: a management server that manages, on an item-by-item basis, a goods shipment time period to a customer residence from one or more nearby bases based in a predetermined area allowing delivery to the customer residence within a predetermined time period; and a customer terminal in the customer residence, wherein upon execution on the system, the program executes: a step of providing the customer terminal with a user interface that includes a plurality of goods shipment time periods as scale marks; a step of allowing the customer terminal to designate one of the goods shipment time periods, through the user interface; a step of allowing the customer terminal to request the management server to search for goods that can be shipped within the designated goods shipment time period; and a step of causing the management server to execute the search and to extract the goods that can be shipped within the designated goods shipment time period and goods that cannot be shipped within the designated goods shipment time period in a manner discriminated from each other.

## Description

### Technical Field

The present invention broadly relates to a goods search method and the like in a management system and the like that manage shipment and delivery of products and goods and, more specifically, to a method for searching for deliverable goods in retailing businesses and online shopping businesses.

### Background Art

Conventionally, a technique has been provided that reduces the transport time period by managing the stocks of products and goods, and improves the transport efficiency by optimizing the transport route.

For example, a product shipment management system has been proposed that prevents quantitative variation from occurring in the state of stocks of diversified types of products in a delivery warehouse in each sales area, eliminates product transportation between delivery warehouses as much as possible, and reduces transport means' forwarding time period, thereby improving the transport efficiency (Patent Literature 1) .

That is, Patent Literature 1 discloses a product shipment management system including: stock management means; order management means; shipment management means; product allocation/assignment means; terminal apparatuses provided for respective dealers; and a communication line that connects the apparatuses, wherein a plurality of delivery warehouses are provided, the delivery warehouses being provided for respective areas of the dealers selling various types of products, the various types of products make-to-stock-produced in a production factory are conveyed into each of the delivery warehouses, a stock state of the products conveyed into each of the warehouses is stored in the stock management means, when the dealer transmits a product order based on an order placed by a customer to the order management means, the product allocation/assignment means allocates a type of stocked product according to the order in conformity with the stock state stored in the stock management means, and the shipment management means updates content of the stock management means, and wherein the product allocation/assignment means checks whether or not the product ordered by the customer is present in the stock state stored in the stock management means, and allocates the stocked product to the order by the customer if the stocked product stocked for a period longer than a predetermined period is present, but sorts, with respect to the stock time period, the stock products that are stored in the stock management means and are present in the delivery warehouse for each area of the dealer having placed the order if the stocked products are absent, and allocates the stocked products having the longest stocked time period to the order placed by the customer.

A merchandize flow control system setting a substantial, optimum transport path from the real-time information about the load of an automatic warehouse, the number of work items in standby, and the share of the transporting facility has also been proposed (Patent Literature 2).

That is, Patent Literature 2 discloses a merchandize flow control system (MCS) for calculating the anticipated transporting time from the starting place to the arriving place and select the optimum transport path, the system including a transport command management part to conduct the management upon receiving the layout information and the real-time working information about the load of the automatic warehouse grouped by unit links and the number of works in standby grouped by unit links, and an optimum path production part which receives the layout information of the transport command management part and the real-time working information in a certain cyclic period and calculates the anticipated transporting time through modeling, and on the basis of the result therefrom, selects the transport path having the minimum anticipated transporting time as the optimum transport path.

Meanwhile, various GUIs (graphical user interfaces) have been developed as a way of showing a target object (data) on a computer, and include a slider-type control program (Patent Literature 3).

That is, Patent Literature 2 discloses a user interface control program by which a process for controlling a user interface in a computer equipped with a control device and a display device is performed by the control device, the program causing the control device to execute: a step of displaying, on the display device, a slider-type graphic interface for instruction for a predetermined operation, with a state of a continuously changing predetermined index being designated; a step of issuing an instruction for the predetermined operation in which a state of the predetermined index corresponding to the instructed position is designated, in a case of an instruction on a position except an end of the graphic interface; and a step of issuing an instruction for an operation different from the predetermined operation, in a case of an instruction on a position of an end of the graphic interface is instructed.

### Citation List

### Patent Literature

Patent Literature 1: Japanese Patent Laid-Open No. 2004-299861
Patent Literature 2: Japanese Patent Laid-Open No. 2004-244217
Patent Literature 3: Japanese Patent Laid-Open No. 2008-234457

### Summary of Invention

### Technical Problem

However, in recent online shopping businesses, the competition between short-time delivery services is activated. Further system improvement for delivering goods in a short time period is required. In particular, it is expected that GUIs for a goods search method and the like including a way of showing goods deliverable within a predetermined time period will be further improved.

### Solution to Problem

A goods search program according to one embodiment of the present invention is a computer program to be executed, for searching for goods, in a goods shipment management system including: a management server that manages, on an item-by-item basis, a goods shipment time period to a customer residence from one or more nearby bases based in a predetermined area allowing delivery to the customer residence within a predetermined time period; and a customer terminal in the customer residence, wherein upon execution on the system, the program executes: a step of providing the customer terminal with a user interface that includes a plurality of goods shipment time periods as scale marks; a step of allowing the customer terminal to designate one of the goods shipment time periods, through the user interface; a step of allowing the customer terminal to request the management server to search for goods that can be shipped within the designated goods shipment time period; and a step of causing the management server to execute the search and to extract the goods that can be shipped within the designated goods shipment time period and goods that cannot be shipped within the designated goods shipment time period in a manner discriminated from each other.

The user interface is a slider interface including a knob that a user can directly operate, and when the knob on the slider interface is directly operated to change a position of the knob to change the scale mark accordingly, the customer terminal is allowed to request the management server to re-search, based on the goods shipment time period on the changed scale mark.

### Advantageous Effects of Invention

The goods search program and the like according to one embodiment of the present invention exert advantageous effects of improved GUIs, a capability of capturing fine latent demands, and the like.

### Brief Description of Drawings

Figure 1 illustrates facilities, a distribution channel and the like in a goods shipment management system according to one embodiment of the present invention.
Figure 2 illustrates an entire configuration example of the goods shipment management system according to one embodiment of the present invention.
Figure 3 illustrates a functional block configuration of a management server in the goods shipment management system according to one embodiment of the present invention.
Figure 4 illustrates an appearance configuration example of an information processing apparatus (user terminal) in the goods shipment management system according to one embodiment of the present invention.
Figure 5 illustrates a functional block configuration of hardware constituting the information processing apparatus according to one embodiment of the present invention.
Figure 6 illustrates a cooperation concept in the goods shipment management system according to one embodiment of the present invention.
Figure 7 is a flowchart illustrating a processing operation flow in the goods shipment management system according to one embodiment of the present invention.
Figure 8 is a flowchart illustrating a processing operation flow in the goods shipment management system according to another embodiment of the present invention.
Figure 9 illustrates a display example on the information processing apparatus (user or customer terminal) in the goods shipment management system according to one embodiment of the present invention.
Figure 10 illustrates an operation example for the information processing apparatus (user or customer terminal) in the goods shipment management system according to one embodiment of the present invention.
Figure 11 illustrates a processing operation flow of the information processing apparatus or the like (user or customer terminal) in the goods shipment management system according to one embodiment of the present invention.
Figure 12 illustrates a processing operation flow of the information processing apparatus (user or customer terminal) or the like in a goods shipment management system according to another embodiment of the present invention.
Figure 13 illustrates an operation and a display example for the information processing apparatus (user or customer terminal) in the goods shipment management system according to the other embodiment of the present invention.
Figure 14 illustrates an operation and a display example for the information processing apparatus (user or customer terminal) in the goods shipment management system according to the other embodiment of the present invention.
Figure 15 illustrates a processing operation flow of the information processing apparatus or the like (user or customer terminal) in a goods shipment management system according to still another embodiment of the present invention.
Figure 16 illustrates an operation and a display example for the information processing apparatus (user or customer terminal) in the goods shipment management system according to still another embodiment of the present invention.
Figure 17 illustrates an operation and a display example for the information processing apparatus (user or customer terminal) in the goods shipment management system according to the still other embodiment of the present invention.
Figure 18 illustrates an operation and a display example for the information processing apparatus (user or customer terminal) in the goods shipment management system according to the other embodiment of the present invention.

### Description of Embodiments

A goods search method according to one embodiment of the present invention and the like are hereinafter described in detail with reference to the drawings.

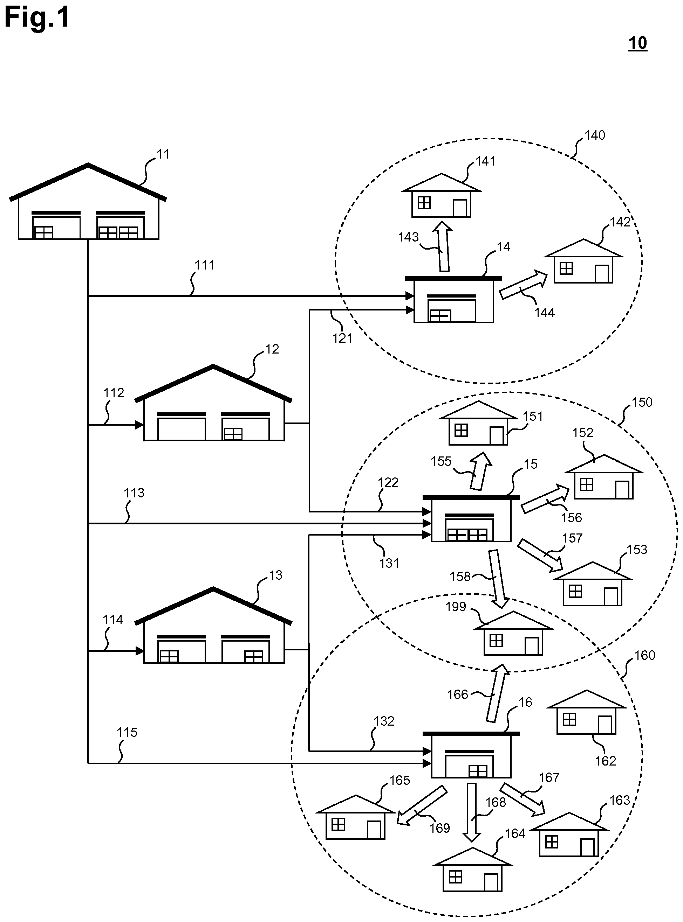

Figure 1 schematically shows facilities and distribution channels in a goods shipment management system that executes a goods search method and the like according to one embodiment of the present invention (hereinafter also simply called "goods shipment management system"). In this diagram, the goods shipment management system 10 in view of the facilities and the distribution channel includes distribution centers 11 to 13, and nearby bases 14 to 16, in a roughly classified manner, and constitutes a part of a large distribution network that delivers goods and the like to customer residences 141 to 142, 151 to 153, 162 to 165 and 199 via routes 143 to 144, 155 to 158 and 166 to 169.

The numbers of distribution centers 11 to 13 and nearby bases 14 to 16 are not limited to these numbers. Any number of centers and any number of bases may be adopted. Hereinafter, to facilitate understanding the present invention, description is made based on the model shown in Figure 1 for the sake of convenience.

### [Distribution centers and nearby bases]

The goods shipment management system according to one embodiment of the present invention includes at least two types of facilities, for example. More specifically, in addition to conventional distribution centers serving as distribution bases, the nearby bases are provided as geographical bases capable of distribution to customer residences within a predetermined time period.

That is, the nearby base is a delivery base provided so that goods and the like can be delivered to a customer in a relatively short time period (e.g., about 30 minutes to an hour; sometimes about several hours).

As shown in Figure 1, the individual distribution centers may have roles different from each other. For example, in this diagram, the distribution center 12 delivers goods and the like to the nearby bases 14 and 15 via the routes 121 and 122, and the distribution center 13 delivers goods and the like to the nearby bases 15 and 16 via the routes 131 and 132. Meanwhile, the distribution center 11 delivers the goods and the like to the other distribution centers 12 and 13 via the routes 112 and 114, and further has a role of delivering the goods and the like to the nearby bases 14, 15 and 16 via the routes 111, 113 and 115. For example, to the nearby base 14, goods and the like are usually supplied from the geographically near distribution center 12. However, in a case where the distribution center 12 has no stock, the goods and the like are sometimes supplied from the distribution center to the nearby base 14.

Although not shown in Figure 1, routes for directly delivering goods and the like from the distribution centers 11 to 13 to the customer residences may be provided.

In Figure 1, a nearby area 140 indicates an area allowing goods and the like to be delivered from the nearby base 14 within a predetermined time period (e.g., 30 minutes, one hour or the like; sometimes about several hours). This area schematically includes the customer residences 141 and 142.

Likewise, a nearby area 150 indicates an area allowing goods and the like to be delivered from the nearby base 15 within a predetermined time period (e.g., 30 minutes, one hour or the like; sometimes about several hours). This area schematically includes the customer residences 151, 152, 153 and 199. Likewise, a nearby area 160 indicates an area allowing goods and the like to be delivered from the nearby base 16 within a predetermined time period (e.g., 30 minutes, one hour or the like; sometimes about several hours). This area schematically includes the customer residences 162, 163, 164, 165 and 199.

Here, in this diagram, the customer residence 199 is schematically included in both the nearby areas 150 and 160. This indication means that goods and the like can be delivered to the customer residence 199 from the nearby base 15 and also from the nearby base 16 within the predetermined time period (for example, the goods and the like can be delivered from the nearby base 15 to the customer residence 199 in 20 minutes, the goods and the like can be delivered from the nearby base 16 to the customer residence 199 in 30 minutes).

### [Distribution management]

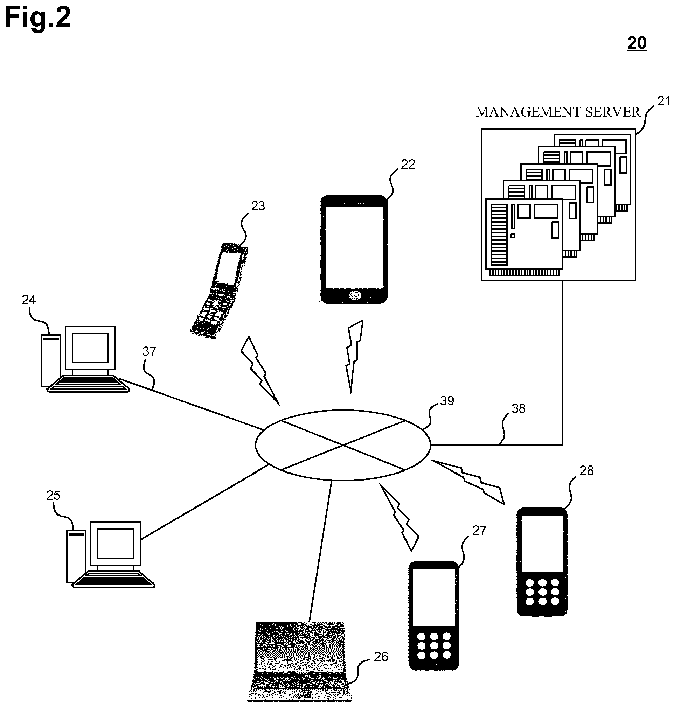

In the above description, the description parts "goods and the like can be delivered ... from the nearby base within a predetermined time period", "in a case where ... no stock" and the like can be determined by the time period (expected time period) required for distribution and delivery and the fact that the number of stocks of goods and the like in the bases is managed on the system. An entire configuration example of the goods shipment management system that executes the goods search method and the like according to one embodiment of the present invention is described later with reference to Figure 2. For example, a management server in the goods shipment management system that executes the goods search method and the like according to one embodiment of the present invention is installed in any of the distribution centers and nearby bases in Figure 1, or in a company premise, not shown. This management server is connected to the individual centers and the individual bases through information terminals and a network. The stock situation and the numbers of acceptances and deliveries of goods and the like at each base and the like, and the situations of distribution and delivery between the bases and to destinations are managed in real time. Furthermore, based on these performances, the distribution and delivery time periods between the bases and to the destinations are calculated, and successively updated and managed.

Consequently, each route in Figure 1 is not always the only route. For example, the route from the distribution center 11 to the nearby base 14 is managed as a route indicated by reference numeral 111, on the system. One or more routes other than this route may be stored and managed as alternative routes. Likewise, the route from the nearby base 14 to the customer residence 141 is managed as a route indicated by reference numeral 143 in this diagram, on the system. One or more alternative routes may be stored and managed.

For example, these alternative routes may be alternatively adopted according to the traffic situation at the time, and instructions may be issued to specific distribution facilities (bases) and distribution means (delivery vehicle).

### [Sales management]

The goods shipment management system that executes the goods search method and the like according to one embodiment of the present invention also performs sales management of goods and the like. The goods shipment management system according to one embodiment of the present invention also operates in conjunction with store POS register and a teleshopping (electronic transaction) system, and manages the sales performance in the store and the sales performance through teleshopping on a customer-by-customer basis. As databases therefor, the following databases (D1) to (D5) are provided in one embodiment, thereby allowing each terminal to refer thereto and issue an update request.

Note that the databases (D1) to (D5) are examples. Besides these databases, appropriate databases and tables are generated as required.

### (D1) Customer management database

In this database, items pertaining to the customers are registered. Personal information, such as customer names, addresses, and phone numbers, and supplementary information, such as held points, and nearby bases, are registered.

### (D2) Goods management database

In this database, items pertaining to goods are registered. Goods names, goods codes associated with JAN codes, and the like are registered and managed.

### (D3) Stock management database

This database is for managing the stocked goods, appropriately cooperates with the goods management database, and required tables are derived and extracted.

### (D4) Warehouse management database

This database is for managing the stocked goods stored in warehouses of the distribution centers and the like.

### (D5) Sales management database

This database is a performance management database pertaining to goods sold at each base or store.

### [Roles of nearby base]

In the goods shipment management system according to one embodiment of the present invention, the nearby base has the following roles (system operations, and operations by operators, such as staff in the base, are collectively listed).
(1) Storing and sorting of target goods, and management of updating target goods.
(2) Delivery process in a case where an order from a customer in the nearby area for target goods is placed (picking up ordered goods, destination labeling).
(3) Temporary storing and delivery to a customer residence in a case where goods ordered by a customer in the nearby area is reached from a distribution center (typically, the goods with destination labels being attached are delivered to the nearby base).
(4) Bundling and delivering a plurality of goods ordered by a customer in the nearby area (in a case of bundling and delivering, the bundling operation and destination labeling operation are performed in the nearby base) .
(5) Redelivery in a case where a customer in the nearby area is absent when delivery is made.
(6) Simultaneously delivering additionally ordered goods in a case where the goods are additionally ordered at the time of (5) redelivery described above.

According to one embodiment of the present invention, delivery from the distribution center to the nearby base is executed as an operation in the same business entity, and no delegation is made to another delivery company. For example, the target goods are delivered several times a day by an intra-business delivery.

Figure 2 illustrates an entire configuration example of the goods shipment management system that executes the goods search method and the like according to one embodiment of the present invention.

As shown in Figure 2, according to the configuration of one embodiment, the goods shipment management system 20 includes a management server 21, and various information processing apparatuses that the users (customers), deliverers and the like use (in the diagram, mobile information terminals, or a tablet terminal 22, a mobile phone 23, PCs 24 to 26, and POS terminals 27 to 28 are shown as an example; hereinafter, sometimes collectively called "various terminals" or simply called "terminals"). The management server 21 and the various terminals are communicably connected to each other via a dedicated line, and a public line, such as the Internet (reference numerals 37 to 39 denote wired lines), as shown in Figure 1. The line may be wired or wireless. In a case of the wireless line, the mobile information terminals, or the tablet terminal 22 and the mobile phone 23, and the POS terminals 27 to 28 are wirelessly connected to the Internet 39 via base stations and access points, not shown, and are further connected to the management server 21 via the line 38 in a mutually communicable manner.

Here, the access point is a wireless device for connecting wireless terminals, such as PCs and smartphones, to each other and to another network. Typically, the device operates according to a communication protocol of the first layer (physical layer) and the second layer (data link layer) in the OSI reference model.

Many mobile phones and mobile information terminals and tablets at the time of this application have processing capabilities comparing favorably to personal computers (PCs) (the communication processing speed, image processing capability, etc.), and are to be regarded as small computers.

Typically, the program and software required to execute the present invention are installed or stored in HDDs, SSDs and the like in storages of PCs and mobile information terminals, are read as a software module that is the entire or a part of the program or software in the memory in the storage as required during execution of the program and software, and are computed and executed by the CPU.

Alternatively, browser-based computers or mobile information terminals may be adopted. In this case, a configuration is adopted where the program is distributed from another server or a computer to the terminals as required and then the browsers on the terminals execute the program.

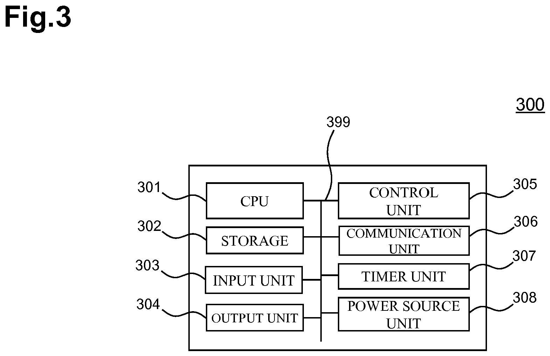

The hardware configuration of the management server 21 may also basically adopt that of a PC (for confirmation, description is made later with reference to Figure 3). Although the present invention is not specifically limited thereto, the management server 21 may have a configuration suitable for large-scale data processing, by means of operating multiple PCs (e.g., several tens to several tens of thousands) in parallel, to improve the hardware specifications as required.

Figure 3 illustrates the functional block configuration of the management server in the goods shipment management system that executes the goods search method and the like according to one embodiment of the present invention. According to an example, the operation of the management server is achieved by the individual operations of pieces of hardware described later and the cooperation between the software and these pieces of hardware.

The goods search method and the like according to one embodiment of the present invention can be executed by the management server and an information processing apparatus (user terminal apparatus), described later.

In Figure 3, in a roughly classified view, the management server 300 as the overall hardware blocks includes: a CPU 301 for various comparative and operation processes; a RAM; a ROM; a storage 302, such as a flash memory; an input unit 303, such as a keyboard and a pointing device; an output unit 304, such as a display and a speaker; a control unit 305 for controlling various signals; a communication (interface) unit 306 (of any of wireless and wired schemes); a timer unit 307 for obtaining the time; and a power source unit 312.

These modules are appropriately connected to each other by a communication bus and a power supply line (in Figure 3, the lines are collectively shown as an appropriately segmented connection line 399 for the sake of convenience), as required.

Typically, the program and software executed on the management server 300 required to implement the present invention are installed or stored in a hard disk, SSD (Solid State Drive), a flash memory or the like that constitute the storage 302, are read as a software module that is the entire or a part of the program or software in the memory in the storage 302 as required during execution of the program and software, and are computed and executed by the CPU 301.

The computation is not necessarily executed in the central processing unit, such as CPU 301. An auxiliary processor, such as a digital signal processor (DSP), not shown, may be adopted.

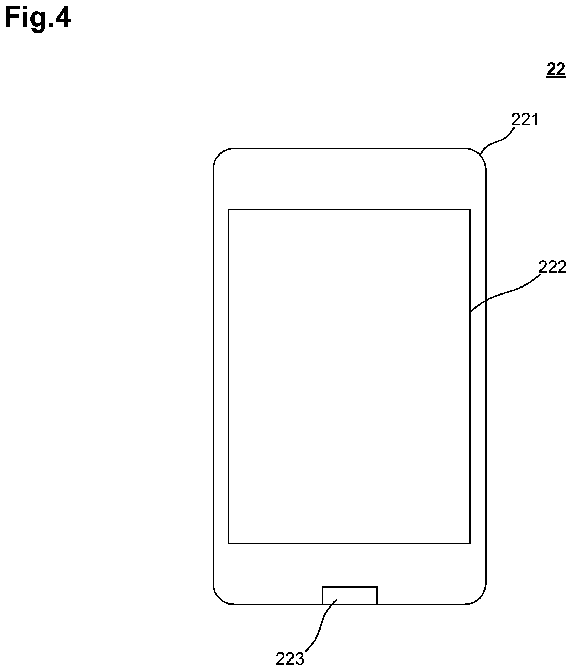

Figure 4 illustrates an appearance configuration of the tablet terminal 22 as an information processing apparatus (user terminal apparatus) in the goods shipment management system that executes the goods search method and the like according to one embodiment of the present invention. In Figure 4, the tablet terminal 22 includes a housing 221, a display 222, and a hardware button 223 provided at the lower center of the housing 221. Typically, the display 222 is made up of a liquid crystal display (LCD) and the like, and can display various pieces of information, such as characters, still images, and moving images. The display 222 is caused to display a menu button, a software keyboard and the like, which are touched with a finger or a stylus pen (not shown), thereby allowing an instruction (command) to be issued to the tablet terminal 22. In this respect, the hardware button 223 is not a necessary configuration element. For the sake of convenience of description of the present invention, this button is implemented as a button having a role of performing a certain function. It is a matter of course that the hardware button 223 can be replaced with a menu button displayed on a part of the display 222.

The display 222 includes a multi-touch input panel. The coordinates of a touch-input position on the touch input panel are transmitted to the processing system (CPU) of the tablet terminal 22 through an input device interface (not shown), and are processed. The multi-touch input panel is configured to be capable of sensing multiple contact points on the panel at the same time. The sensing (sensor) can be achieved through any of various schemes. The scheme is not necessarily limited to the contact sensor. For example, an instruction point to the panel can be extracted using an optical sensor. Besides the contact sensor and the optical sensor, a capacitance sensor that senses a touch with human skin can be used.

Although not shown in Figure 4, the tablet terminal 22 may include a microphone and a speaker. In this case, the voice of the user or the like picked up by the microphone may be determined and adopted as an input command. Although not shown in Figure 4, a camera device, such as of CMOS, may be implemented on the rear surface of the tablet terminal 22.

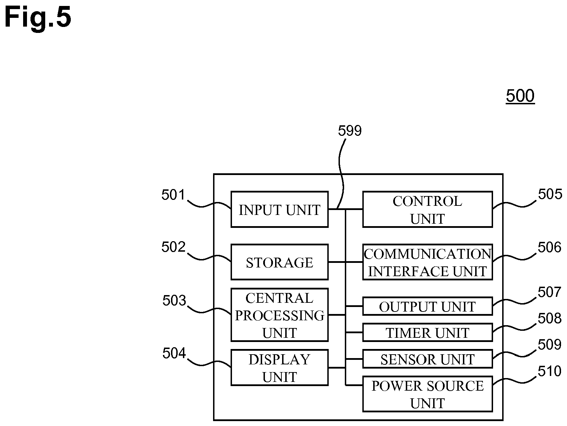

Figure 5 exemplifies a functional block diagram of the hardware constitutes the tablet terminal 22 according to one embodiment of the present invention. The operation of the tablet terminal 22 is achieved by the individual operations of pieces of hardware described later and the cooperation between the software and these pieces of hardware.

In Figure 5, in a roughly classified view, the tablet terminal 500 as the overall hardware blocks includes: an input unit 501 made up of a hardware button 223 as shown in Figure 4, a multi-touch input panel provided on the display 222, a microphone and the like; a storage 502 made up of a hard disk, RAM and/or ROM and the like for storing programs, data and the like; a central processing unit 503 made up of a CPU that performs various numerical calculations and logical computations through the programs; a display unit 504 made up of the display 222 and the like; a control unit 505, such as of a chip, an electric system and the like for performing control; a communication interface unit 506 that includes a slot for accessing the Internet, a port for optical communication, and a communication interface; an output unit 507 that includes a speaker, a vibrator, and an infrared projector; a timer unit 508 for obtaining the time and the like; a sensor unit 509 made up of an image sensor, such as CMOS, an infrared sensor, an inertial sensor and the like; and a power source unit 510 for supplying power to each module in the apparatus. These modules are appropriately connected to each other by a communication bus and a power supply line (in Figure 5, the lines are collectively shown as an appropriately segmented connection line 599 for the sake of convenience), as required.

The sensor unit 509 may include a GPS sensor module for identifying the position of the tablet terminal 500 (22). Signals sensed by the image sensor, such as CMOS, the infrared sensor and the like, which constitute the sensor unit 509, can be processed as input information by the input unit 501.

Typically, the program and software executed on the tablet terminal 500 required to implement the present invention are installed or stored in a hard disk, SSD (Solid State Drive), a flash memory or the like that constitute the storage 502, are read as a software module that is the entire or a part of the program or software in the memory in the storage 502 as required during execution of the program and software, and are computed and executed by the CPU 503.

The computation is not necessarily executed in the central processing unit 503, such as CPU. An auxiliary processor, such as a digital signal processor (DSP), not shown, may be adopted.

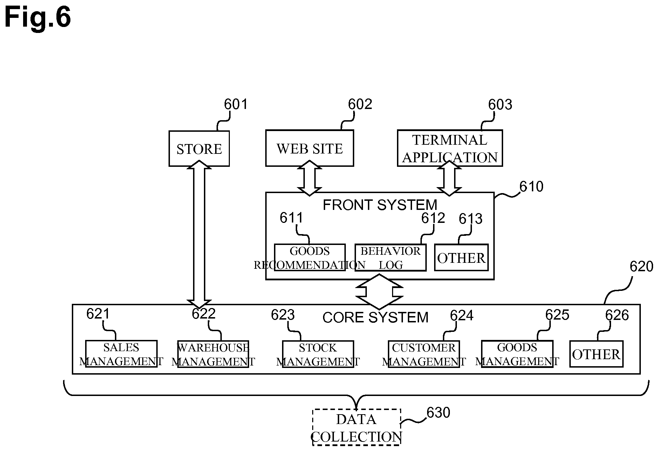

Figure 6 shows a concept of cooperative operations in the goods shipment management system that executes the goods search method and the like according to one embodiment of the present invention.

The goods shipment management system according to one embodiment of the present invention in Figure 6 is represented in a front system 610 and a core system 620. In this diagram, the core system 620 is accessible from the store (store's POS register) 601, and the front system 610 for a website 602 and a terminal application 603, such as the customer terminal. The store (store's POS register) 601 is for exchanging information on goods sold in an actual store and goods requested to be delivered to the actual store, with the core system 620. The website 602 and the terminal application 603 through the front system 610 are for exchanging information on goods and the like ordered or sold through an electronic transaction via the Internet, with the core system 620.

The front system 610 is a software module that serves as the interfaces of transactions and procedures between the core system 620, and the website 602 for the customer terminal and the terminal application 603, such as the customer terminal, in the goods shipment management system according to one embodiment of the present invention, and operates on the management server 21 or another server. The front system 610 includes, as its submodules: a goods recommendation logic 611 that recommends goods for the customer terminal and the like, a behavior log logic 612 that is viewed from the customer terminal and tracks ordered goods and the like, and a logic 613 including another processing system.

The core system 620 includes: a sales management processing system 621 including a sales management DB; a warehouse management processing system 622 including a warehouse management DB; a stock management processing system 623 including a stock management DB; a customer management processing system 624 including a customer management DB; a goods management processing system 625 including a goods management DB; and another processing system 626 including another DB.

As shown in Figure 6, data collection (630) can be performed from the core system 620 that is accessed from the store (store's POS register) 601 and from the front system 610 for a website 602 for the customer terminal and a terminal application 603, such as of the customer terminal, and updates and manages the goods information, sales information and the like, and the data can be transmitted to a data warehouse, not shown, for example. The customer information, goods information, purchase information (sales information), browsing information and the like are collected by a data warehouse for analysis, not shown, and various relationships can be found by analysis of the accumulated data.

The present invention is not specifically limited thereto. Typically, the data accumulated in the data warehouse is a large amount of integrated business data arranged in a time series manner, and the relationships between various items are analyzed. For example, the relationships between the elements having not been identified by the conventional simple aggregation are verified from sales data in the store 601; the relationships include "men in 40's and 50's who buy fitness goods often buy related books together" and "daily commodities, such as waterproof spray, sell well the day before a rainy day".

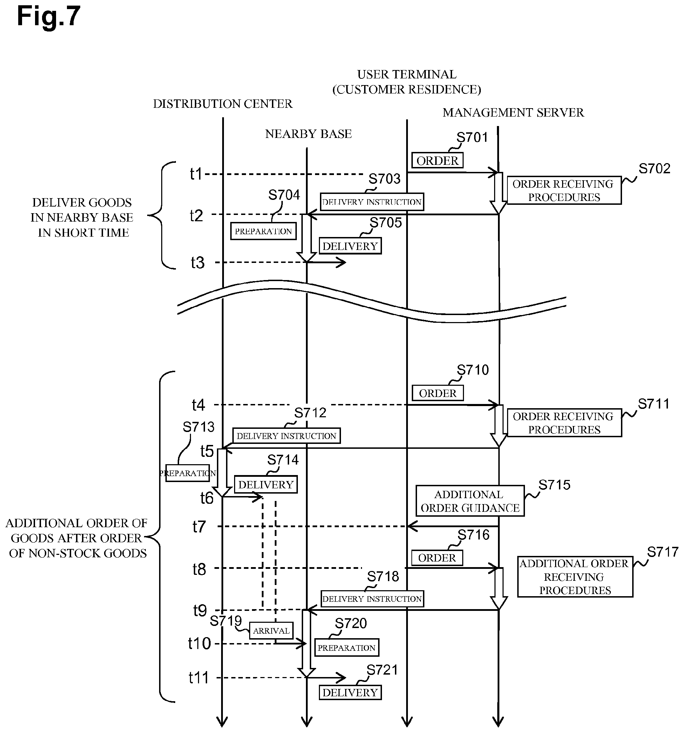

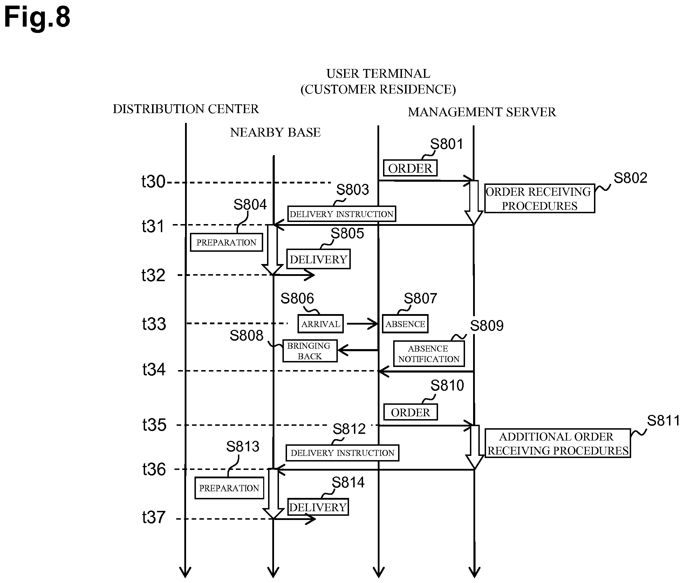

Figures 7 and 8 show processing operation flows in the goods shipment management system that executes the goods search method and the like according to one embodiment of the present invention. The operation flows shown in Figures 7 and 8 exemplify variations of order/delivery that can be achieved by "nearby bases", which are adopted in one embodiment of the present invention in an exemplary manner. Figure 7 shows a situation where goods stocked in the nearby base can be delivered in a short time period (a flow from time t1 to time t3 in this diagram), and a situation where another goods stocked in the nearby base are ordered at any time until goods ordered by the customer pass through the nearby base including the customer residence as the nearby area after the goods are shipped from the distribution center, and the goods are delivered together with the previously ordered goods (a flow from time t4 to time t11 in this diagram).

Figure 8 further exemplifies a situation where during redelivery after unsuccessful delivery from the nearby base due to absence or the like, an additional order of another item of goods can be accepted and both the items of the goods can be delivered together (a flow after time t33 in this diagram) .

### [Scene of delivery of goods in nearby base in short time period]

At time t1 in Figure 7, when an order of goods is placed from the user terminal (customer terminal) in the customer residence to the management server 21 of the goods shipment management system (step S'701), the management server 21. performs order receiving procedures (step S702), and issues an instruction of delivering the ordered goods to the base terminal in the nearby base at time t2 (step S703).

The base terminal in the nearby base having received the delivery instruction issues a shipment preparing instruction, and the shipment is prepared in the nearby base from time t2 to time t3 (step S704), and the ordered goods are delivered to the customer residence at time t3 (S705).

### [Scene of receiving additional order of another goods after order of goods]

At time t4 in Figure 7, an order of goods is issued from the user terminal (customer terminal) in the customer residence to the management server 21 of the goods shipment management system (step S710). In this embodiment, the goods are delivered from the distribution center to the customer residence via the nearby base. The goods ordered this time are also scheduled to be shipped from the distribution center. The order receiving procedures are performed by the management server 21 from time t4 to time t5 (step S711), and at time t5, an instruction of delivering the ordered goods is issued to the base terminal in the distribution center (step S712).

The base terminal in the distribution center, which has received the delivery instruction, issues a shipment preparing instruction, and the shipment is prepared in the distribution center from time t5 to time t6 (step S713), and the ordered goods are delivered to the nearby base at time t6 (S714).

The goods shipped from the distribution center to the nearby base at time t6 arrive at time t10 as shown in this diagram. During this period, the following processing operation is executed.

First, at time t7, the management: server 21 notifies the user terminal (customer terminal) that the previously ordered goods have been shipped, and transmits a guidance of an additional order for other goods stocked in the nearby base in the middle of the delivery route (step S715).

Next, at time t8, an additional order of other goods stocked in the nearby base is placed from the user terminal (customer terminal) to the management server 21 through a guidance screen, not shown (step S716). The management server 21 performs additional order receiving procedures (step S717), and issues an instruction of delivering the additionally ordered goods to the base terminal in the nearby base at time t9 (step S718).

At this time, the goods shipped from the distribution center at time t6 does not reach the nearby base, and in the nearby base, from time t9 to time t11, preparation for shipping the additionally ordered goods subjected to the delivery instruction is performed (step S720).

At time t10 during the preparation for shipping the additionally ordered goods in the nearby base, the goods shipped from the distribution center arrives at the nearby base (step S719). In the nearby base, an operation of bundling the goods having arrived and the additionally ordered goods is performed.

Lastly, at time t11, the bundled goods are shipped from the nearby base to the customer residence (step S721).

### [Scene of receiving additional order of another goods during redelivery from nearby base]

At time t30 in Figure 8, when an order of goods is placed from the user terminal (customer terminal) in the customer residence to the management server 21 of the goods shipment management system (step S801), the management server 21 performs order receiving procedures (step S802), and issues an instruction of delivering the ordered goods to the base terminal in the nearby base at time t31 (step S803).

The base terminal in the nearby base having received the delivery instruction issues a shipment preparing instruction, and the shipment is prepared in the nearby base from time t31 to time t32 (step S804), and the ordered goods are delivered to the customer residence at time t32 (S805).

At time t33, the goods shipped from the nearby base reaches the customer residence (step S806). However, since the customer is absent, an absence slip is put into the post or the like (step S807), and the goods are temporarily brought back to the nearby base (step S808).

At time t34, the management server 21 transmits, to the customer terminal, an absence notification accompanied by a guidance of an additional order (step S809).

Next, at time t35, an additional order of another goods is placed from the user terminal (customer terminal) to the management server 21 through the unshown guidance screen (step S810). The management server 21 performs additional order receiving procedures (step S811), and issues an instruction of delivering the additionally ordered other goods to the base terminal in the nearby base at time t36 (step S812). By this time, the goods being brought back reaches the nearby base. In the nearby base, from time t36 to time t37, preparation for bundling and shipping the brought-back goods and the other goods ordered to be delivered through the additional order is performed (step S813).

At time t37, the bundled goods are shipped from the nearby base to the customer residence (step S814).

To achieve the order/delivery variations described with reference to Figures 7 and 8, on the core system, the number of stocked goods on an item-by-item basis in each base, the delivery time between the bases, and the delivery time to the customer residence are managed, recalculated as required, and subjected to update control. The current position of the goods being tracked after shipment from the base and being delivered is updated and managed. The delivery scheduled time is recalculated according to the additional order and change in the content of the order, and the time is appropriately notified to the customer terminal and the mobile terminal of the deliverer.

### [Embodiment pertaining to user terminal operation]

Next, an operation and a display example on the user terminal in the goods shipment management system that executes the goods search method and the like according to one embodiment of the present invention are described. The embodiment described below can also operate to have an independent operation and display function for the user terminal, without limitation due to the characteristics of the goods list display and selection provided by the management server in the goods shipment management system described above and without limitation due to the unique configuration of the goods shipment management system of the present invention.

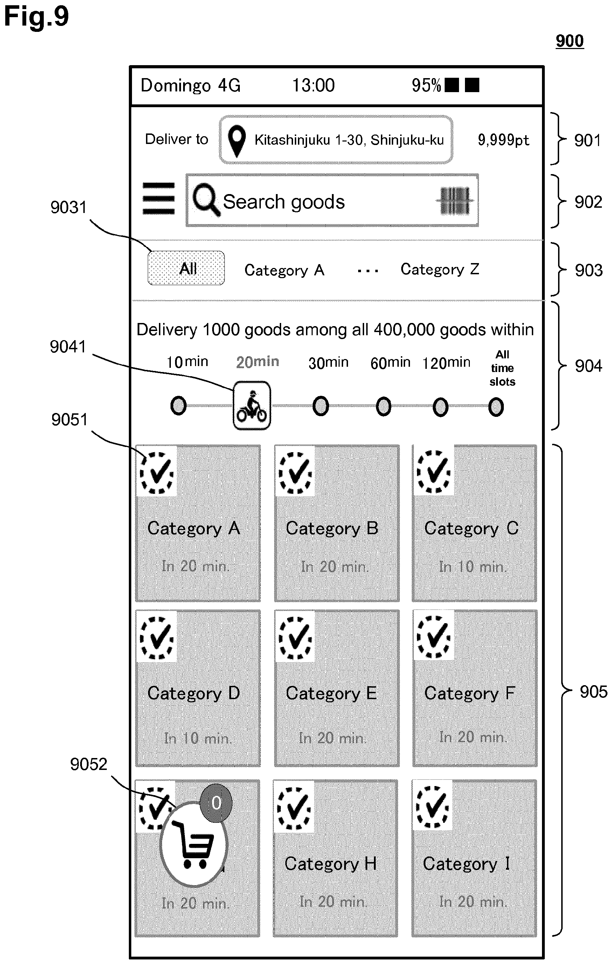

Figure 9 shows a display example of a list of search results of goods deliverable in a predetermined time period on the user terminal according to one embodiment of the present invention, and characteristically shows situations where the predetermined time period itself can be dynamically changed through a slider interface. Although not shown in Figure 9, an AND-condition search with input of a search keyword into a search field 902 and designation into a category designation field 903 can also be performed.

In Figure 9, in a display field 901, a designated (or already registered) delivery place indication, and accumulated points (9,999 pt in this diagram) are displayed. Typically, the delivery place is the customer' or user's home (or location). The search field 902 and the category designation field 903 are displayed below the display field 901. As shown in this diagram, when an "All" button in the category designation field 903 is pressed, all the categories are designated (i.e., narrowing down based on a category is not performed). Goods can be narrowed down by inputting a search keyword into the search field 902.

An operation and display field 904 in Figure 9 is a characteristic part. First, in the operation and display field 904, the number of goods narrowed down by the search field 902 and/or the category designation field 903, and the time in which the goods can be delivered are displayed in an operable manner. That is, in an upper part of this field, for example, a fact that "All 4000,000" goods include 1000 goods deliverable within a predetermined time period (20 minutes) is displayed.

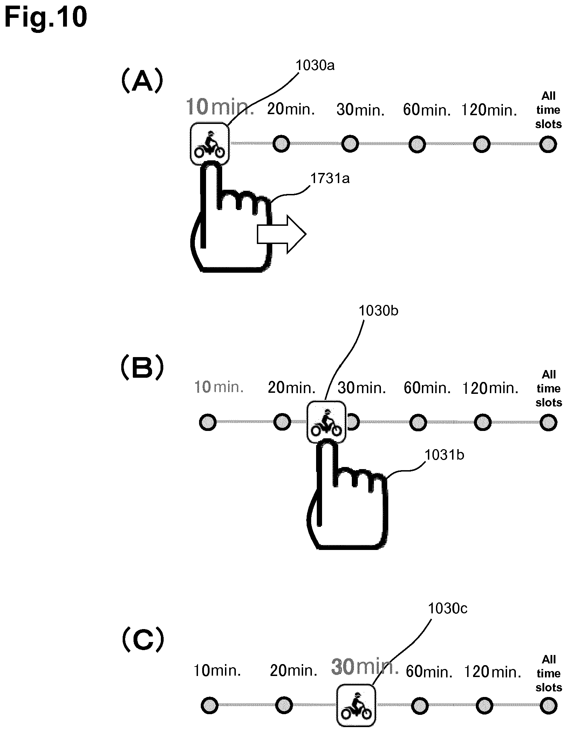

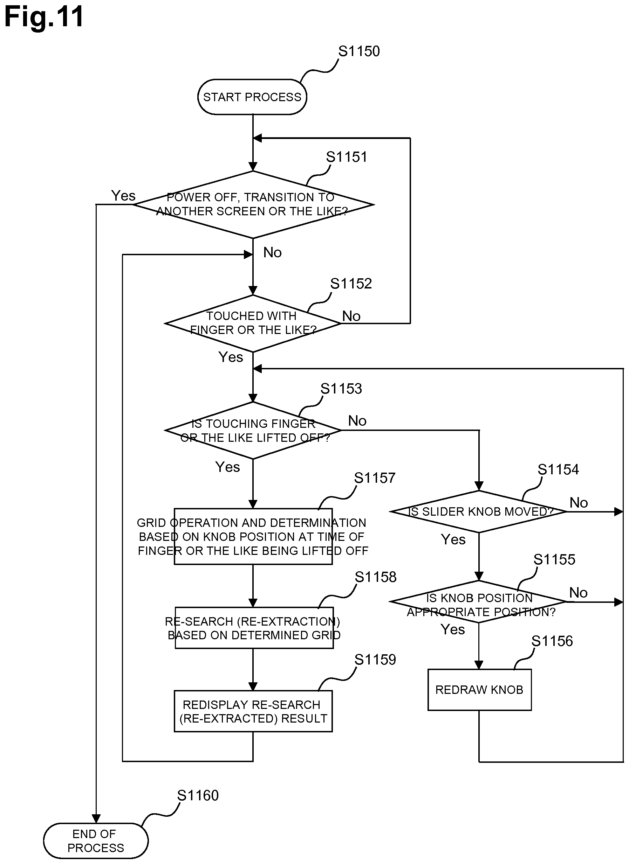

Furthermore, a lower part of this field 904, the slider interface allowing the designation of the deliverable time to be changed is displayed. A knob 9041 of this interface is configured to be capable of changing a designation condition through a direct operation with a finger of the user or the like (the detailed operation is described later with reference to Figures 10 and 11). In this field 904, the knob 9041 is at the position of "(within) 20 min." and serves as an interface for designating narrowing down for goods deliverable within 20 minutes.

That is, as described above, the other embodiment of the present invention is characterized by capabilities of simultaneous narrowing down of three types at the maximum (narrowing down by AND conditions), i.e., (1) narrowing down based on a keyword or the like in the search field 902, (2) narrowing down based on a category in the category designation field 903, and (3) narrowing down based on the deliverable time through the slider interface in the operation and display field 904. It is a matter of course that the narrowing down of these three types is not always required to be used. Narrowing down without use of the search field 902, but with the slider interface in the category designation field 903 and the operation and display field 904 or narrowing down with another combination is allowed. Alternatively, single narrowing down only with the search field 902 or only with the slider interface in the display field 904 is also allowed.

In a search result display field 905 in Figure 9, a result of narrowing down according to the condition described above is displayed as a list of hit goods. In this diagram, all the categories are designated (All (9031) is selected in this diagram). Accordingly, goods irrespective of categories, and goods matching the deliverable time (within 20 minutes) are displayed in rectangular regions. In an upper left part of the rectangular region for each goods, a check button interface allowing switching between selected and not selected through a tap or the like is displayed. For example, a check button 9051 is for switching between states of the search results of a goods A being selected or not selected. The selected goods can be added to a cart icon, described later, individually or collectively through a direct operation, not shown (for example, a flick operation or a drag operation).

This diagram shows that the goods C and goods D among the goods A to I displayed in the search result display field 905 are deliverable "within 10 minutes".

This diagram further shows a pressable cart icon 9052. The cart icon 9052 is not displayed at a specific position in a fixed manner, but is displayed in a floating manner instead, for example. It is configured such that double tapping of the cart icon 9052 and the like can confirm the goods intended to be purchased at the current time.

At an upper right part of the cart icon 9052, for example, the number of goods stored in the cart by the customer at the current time can be displayed. The number of goods in the cart is zero in this diagram.

Results that cannot be displayed in the search result display field 905 can be viewed through an operation to a scroll bar, not shown.

Figure 10 illustrates a guideline of operating the slider interface on the user terminal, and shows situations where (the knob of) the slider interface is operated in a time series manner from Figure 10(A) to (C). In (A) to (C) of this diagram, 10, 20, 30, 60, 120 min. and all time slots (i.e., without temporally narrowing down) are displayed as time indications on the interface, which serve as scale marks for an instruction for picking up a group of goods to be delivered in each time.

In Figure 10(A), the knob 1030a is at the position of "10 min." on the slider interface. The knob 1030a is touched with the index finger of the right hand 1031a of the user to move in the right direction in the diagram (what is called drag movement).

The knob 1030a can be moved laterally on the slider after a touch until separation. Note that a range where the knob 1030a. is movable on the slider is configured (typically, from the left end to the right end of the slider). If dragging beyond the range is tried, the knob 1030a cannot be moved.

Figure 10(B) shows a state where the finger 1031b is slid in the right direction from the state of Figure 10(A) without being lifted off (the knob 1030b on) the screen. The finger is slid to a position slightly before (a little left of) the scale mark position of 30 min. In Figure 10(B), at the position in this diagram, the index finger of the right hand 1031b is lifted off the knob 1030b.

Figure 10(C) illustrates a state immediately after the index finger is lifted off the knob 1030b in the state of Figure 10(B). In (C) of this diagram, the knob 1030c is automatically pulled to the nearer scale mark (30 min.) between the left and right scale marks (i.e., the scale mark of 20 min. and the scale mark of 30 min.) (normalized to a grid position, i.e., the scale mark), and is settled (positioned) at the position of the scale mark of 30 min.

At this time, one embodiment of the present invention is configured so that re-extraction (re-search) of the goods immediately deliverable within 30 min. can be executed (the details are described with reference to Figure 11 and the like).

Figure 11 is a flowchart illustrating, in detail, processes and the like to be executed by the system including the user terminal and the management server through an operation and the like on (the display screen of) the user terminal described with reference to Figures 9 and 10.

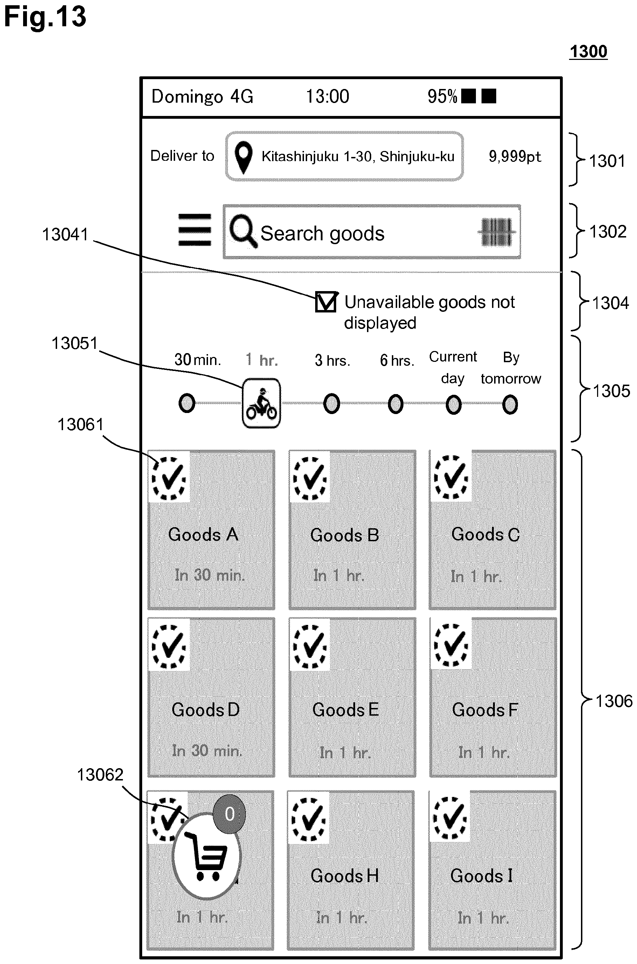

In step S1150, which is the start of the description of this flow, for example, the user terminal is activated (application software is also activated as required), and a screen as shown in Figure 9 (or Figures 13 to 14 and the like described later) is displayed, for example. At this time, on the screen capable of multi-touch detection, detection of whether there is a touch of an object (a button, a knob of a slider or the like) on the screen as an event is performed at a frequency ranging from several times to several tens of times per second. One event thereamong is determination of whether there is power-off (or finish of application) or transition to another screen, the determination being shown in step S1151.

If Yes in step S1151, this operation flow is finished (step S1160). If No, the processing proceeds to step S1152, in which it is determined whether the screen of the user terminal is touched or not (one type of event detection).

If there is no touch with a finger or not in step S1152 (No), the processing returns to step S1151. If there is a touch with a finger or not (Yes), the processing proceeds to step S1153.

In step S1153, it is assumed that the touch with the finger or the like in step S1152 continues, and it is determined whether the touching finger or the like is lifted off or the like (one type of event detection). If No in step S1153, the slider operation described with reference to (A) and (B) of Figure 10 is achieved (described later with reference to steps S1154 to S1156). If Yes in step S1153, the completion of movement of the slider knob and the re-search (re-extraction) described with reference to Figure 10(C) are executed (described later with reference to steps S1157 to S1159).

In step S1154 of Figure 11, it is determined whether or not the slider knob (e.g., the knob 9041 in Figure 9, the knobs 1030a to 1030b in Figure 10, etc.) is moved with the touching finger or the like (for example, it is achieved by periodically detecting the operation of the finger or the like in contact).

If No in step S1154, the processing returns to step S1153. If Yes, the processing proceeds to step S1155, in which it is determined whether (the position of the finger or the like dragging) the knob position is at an appropriate position or not. For example, if (the position of the finger or the like dragging) the knob position is largely deviating from the left or right of the slider (No in step S1155), the knob position is required to be left at the end of the slider, and the processing returns to step S1153. If Yes in step S1155, the processing proceeds to step S1156.

In step S1156, the slider knob is redrawn so as to be aligned with the position of the slightly moved finger or the like, and the processing returns to step S1153. Steps S1153 to S1156 are executed at several times to several tens of times per second. Accordingly, when the user drags the slider knob with the finger or the like, they can sense as if they were moving the knob with their own finger or the like.

In step S1157, the position of the slider knob at the time of the finger or the like of the user being lifted off (the screen of) the user terminal is obtained, and a grid operation through normalization of the knob position is performed to finalize (position) the knob position. Specifically, when the knob position is on the slider, it is determined which scale mark position is nearer between immediate right and left ones, and the nearer scale mark position is adopted as the position of the knob. When the knob position adheres to any one of the right and left ends of the slider (i.e., the knob is intended to be dragged with the finger beyond the range of the slider), the end (it must be the minimum or maximum scale mark position) is determined as the knob position.

Next, in step S1158, based on the grid determined as the settled position of the slider knob immediately after the finger or the like is lifted off the screen (the scale mark positions of 10 min., 20 min., 30 min., 60 min., 120 min., and all time slots serve as grids in 904 of Figure 9), the user terminal issues a request of researching and re-extracting the goods to the management server in the system. For example, when the slider knob originally at the scale mark position of 10 min. is moved to the scale mark position of 30 min., a request or a query in addition to the given condition is transmitted to the management server so as to re-extract the goods deliverable within 30 minutes.

The management server receives the request or the query, this server executes a re-extraction or re-search process based on the content of the request or the query, and returns a part or all of hit goods information to the user terminal.

In step S1159, based on the part or all of the reextracted or re-calculated result received by the user terminal from the management server, information on the part or all thereof is redisplayed on the screen of the user terminal, and the processing returns to step S1152.

### [(1) Narrowing down based on user location (user area)] (Unpurchasable goods displaying/not-displaying function)

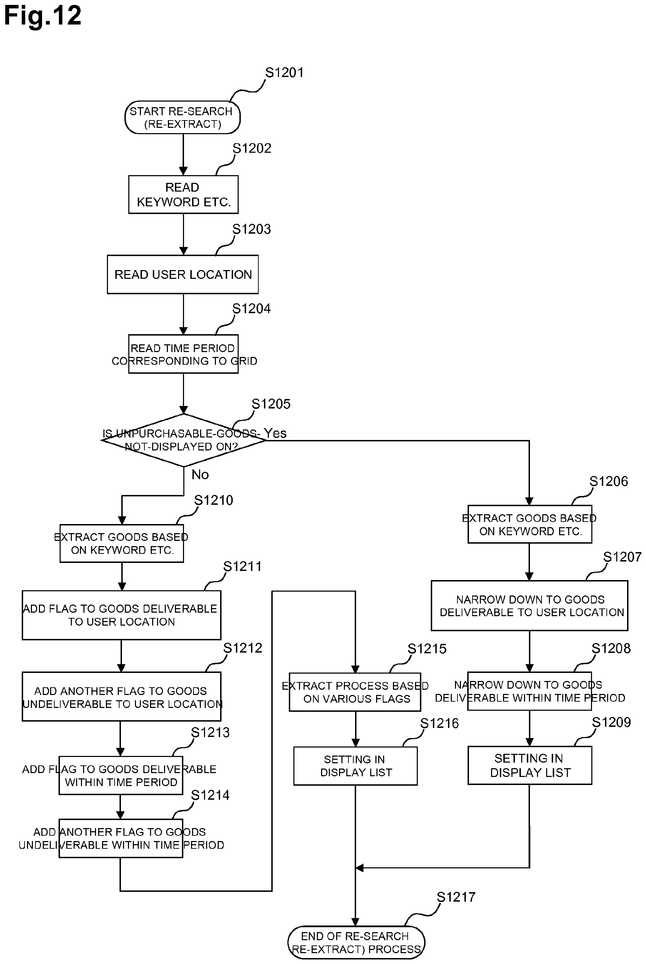

Figure 12 illustrates a processing operation flow of the information processing apparatus (user or customer terminal) or the like in a goods shipment management system according to another embodiment of the present invention. Here, in addition to the goods search (goods narrowing down) through the slider interface described with reference to Figures 9 to 11, the following points are further improved.

### (Improvement 1-1)

In addition to the display of the list of goods deliverable within a designated time period designated through the slider interface, goods undeliverable within the designated time period are also displayed according to a predetermined display method (i.e., in a display mode allowing discrimination from the goods deliverable within the designated time period).

### (Improvement 1-2)

Goods that are deliverable physically within the designated time period designated through the slider interface but are unavailable in the user area (goods undeliverable to the user location) are also displayed according to a predetermined display method (i.e., in a display mode allowing discrimination from the goods deliverable within the designated time period) .

### (Improvement 1-3)

Provided that goods newly displayed according to the improvements 1-1 to 1-2 are defined as "unpurchasable goods", the user is allowed to switch whether to display the unpurchasable goods or not to display these goods (the mode before improvement) according to the user's selection.

As described above, advantages of displaying even goods undeliverable within the time period designated through the slider interface, with a specific decoration (shaded display or the like) being applied, and of displaying even goods that are unavailable in the user area (goods undeliverable to the user location), according to a predetermined display method (with a specific image decoration, such as shaded display) being applied, are as follows.

First, the user is notified that delivery within the designated time period cannot be performed but stocks are secured in another store, a base in another area or the like, with a specific message being accompanied, for example, the goods are displayed accompanied by a message "available with a delivery time slot within 120 minutes" or the like in a case where the goods deliverable within 120 minutes are available even though the designated time is within 60 minutes, thereby allowing a latent demand having not been detected by the search method or the like before improvement to be captured because there is a high possibility that a user who thinks that he/she can wait further for an extra hour purchases the goods.

There is a possibility that the user can buy goods that are unavailable in the area, by temporarily changing the delivery destination address or the like, if the goods are deliverable to the user's work site address, for example. Consequently, the latent demand having not been detected by the search method or the like before improvement can be captured.

Here, according to one embodiment of the present invention, the user area (or the user location or the delivery destination address of the goods) can be preregistered as user information and can be always displayed as default setting information during goods search, while the address can be temporarily changed for each individual purchase (as described above, changed from the user's reception address to the user's work site address).

The following cases are assumed as the situations where the goods that are unavailable in the user area occur.
(a) Goods that are undeliverable to the user area because the goods are specific-area-limited goods and are unavailable at the nearby base accordingly. Here, the "specific area limited goods" are limited goods that are deliverable to a "specific area", and are goods to be separately sold, the goods being originally dealt with on a dozen-by-dozen basis, for example. The "specific area" is an area to which the goods are deliverable from the nearby base in a relatively short time period (e.g., about an hour to several hours), and is a variable specific area about which the area is expected to be enlarged by expanding the nearby bases. It is typically understood that the deliverability of the limited goods (goods to be separately sold etc.) to the "specific area" means sufficient profitability even with delivery of goods that are to be separately sold and have a low unit price.
(b) Alcoholic goods etc. Alcohol sales requires a sales license. Consequently, there is a case with alcohol goods, such as beer, which are not allowed to be sold to areas without the license.

An operation flow example for specific execution of the above technical concept is described in detail with reference to Figure 12. The flow is not limited to the flow shown in Figure 12. The flow can be regarded as a variation of a re-extraction (re-search) process in step S1158 shown in Figure 11.

In Figure 12, after the re-search (re-extraction) process is started (step S1201), the processing proceeds to step S1202, in which if there is a keyword or the like input in the search field (e.g., 902), the keyword or the like is read.

Next, the processing proceeds to step S1203, in which the user's or customer's location (user area) is read. Typically, the delivery destination information indicated in the display field (e.g., 901) is used as the user area. The user area may be preregistered as the "reception address" serving as the main delivery destination of the goods.

Next, the processing proceeds to step S1204, in which the time period (e.g., the delivery time period of 10, 20, 30, 60 minutes, ..., or the like in Figure 10(A) to (C)) corresponding to a grid designated by a knob in the slider interface is read.

Each of steps S1202 to S1204 can be individually skipped if the values (the keyword, the designated area, time, etc.) designated in the last process are unchanged at the start of the re-search (re-extraction) process.

Next, the processing proceeds to step S1205, in which it is determined whether the "unpurchasable goods" is set to be displayed, or set not to be displayed. In one embodiment of the present invention, the setting is switchable by the user (specifically, reference numerals 1304 and 1404 to be described later with reference to Figures 13 to 14 correspond thereto). In this flow, the determination is made according to whether the "unpurchasable goods not-displaying" setting is "ON" or "OFF" (alternatively, the determination may be made according to whether the "unpurchasable goods not-displaying" setting is "OFF" or "ON").

If the setting is "ON" (Yes) in step S1205, the processing proceeds to step S1206 in order to perform normal display that does not display the "unpurchasable goods", and first, in this step, a goods extraction process with a keyword or the like is performed.

Next, the processing proceeds to step S1207, in which goods are narrowed down to goods deliverable to the user area.

The processing then proceeds to step S1208, in which the goods are narrowed down to goods deliverable within the time period designated through the slider interface. The deliverable time on an item-by-item basis can be referred to as needed, by managing, by recalculating in each case, and by applying update control to the number of stocked goods at each base, the delivery time between bases, and the delivery time to the customer residence on the core system (or the management server).

Next, the processing proceeds to step S1209, in which the goods list as a result of the re-search (re-extraction) process is set in a display memory, and the re-search (re-extraction) process is finished (step S1217). Note that the process order of steps S1207 to 31208 is allowed to be appropriately changed.

On the contrary, if the setting is "OFF" (No) in step S1205, the processing proceeds to step S1210 in order to display also "unpurchasable goods", and first, in this step, a goods extraction process with a keyword or the like is performed.

Next, the processing proceeds to step S1211, in which the goods deliverable to the user area are extracted, and a specific flag A is added to the extracted goods. Next, the processing proceeds to step S1212, in which a flag B different from the specific flag A described above is added to the goods undeliverable to the user area.

The processing then proceeds to step S1213, in which the goods deliverable within the designated time period are extracted through the slider interface, and a specific flag C is added to the extracted goods. Next, the processing proceeds to step S1214, in which a flag D different from the specific flag C described above is added to the goods undeliverable within the designated time period.

Note that the number of types of each of the flags A to D is not necessarily limited to one. For example, the flag B and the flag D may each include multiple types of flags. The process order of steps S1211 and S1212, and the process order of steps S1213 and S1214 may be appropriately changed.

As a specific example, an extraction process example is described where the keyword is "juice soda"("juice" AND "soda"), the user area (user location) is "Shinjuku-ku, Tokyo" and the designated delivery time "3 hrs.". First, in step S1210, it is assumed that 750 items of goods extracted with the keyword "juice soda" are hit. In step S1211, a flag "0" (indicating that the goods match the original condition) is added to each of (500 items of) goods deliverable to the user area. In S1212, a flag "1" is added to each of (250 items of) goods undeliverable to the user area.

Next, the processing proceeds to step S1213, in which a flag "0" (indicating that the goods match the original condition) is added to goods deliverable within the time period designated through the slider interface. In step S1214, a flag "one or more" according to the time length is added to the goods undeliverable within the designated time period. For example, a flag "1" is added to the goods deliverable within six hours, and a flag "2" is added to the goods deliverable within the current day.

For example, the goods subjected to the flag process as described above is managed according to the following table (this table is appropriately created by a function, such as of a relational database).

**[Table 1]**

| | | | |
|---|---|---|---|
| Goods No. | Keyword | Delivery to user area | Delivery within designated time |

In the above table, a "Goods No." column stores a management number of the goods hit for the keyword (accompanying information, such as the goods name, manufacturer, and price, can be appropriately extracted by using this management number as a key as required). A "Keyword" column stores a result of match/unmatch for the user-designated keyword (although not specifically described in this embodiment, discrimination between perfect match, partial match, match as a synonym can be reflected). A "Delivery to user area" column stores a flag pertaining to deliverability to the user area (location). A "Delivery within designated time" column stores a flag pertaining to deliverability within the predetermined time.

Next, the processing proceeds to step S1215, in which an extraction process based on various flags added to the extracted goods.

That is, the process is a narrowing-down process of determining the extent to which unmatched goods are displayed, in addition to the goods matching the original search condition. For example, in a case where the search condition is within "1 hr.", it is determined, according to a predetermined condition, whether to display the goods deliverable within "3 hrs." or not, and whether to display the goods deliverable within "6 hrs." in addition to the goods deliverable within "3 hrs." or not.

The "predetermined condition" described above can be set in various views. The simplest setting is a scheme of including the adjacent condition. Specifically, for example, in the case where the designation is within "1 hr.", "3 hrs." (Figure 9), which is an adjacent time grid, is processed to be included.

Alternatively, referring to the sales performance, a determination reference that extracts the goods (leaves the goods to the list presented to the user) even with the delivery time period largely deviating to some extent if the goods sell well (popular goods) may be adopted. Data collected and accumulated in the data warehouse for analysis, which has already been described, may be analyzed to find various relationships, thereby allowing such a condition to be set or changed.

Furthermore, for the goods that are deliverable if the delivery destination is changed to the work site, a message stating this situation may be controlled to be displayed.

Next, the processing proceeds to step S1216, in which the goods list as a result of the re-search (re-extraction) process is set in the display memory, and the re-search (re-extraction) process is finished (step S1217).

Next, referring to Figures 13 to 14, a goods narrowing-down operation and display variations in the user terminal according to another embodiment of the present invention are described.

In Figure 13, in a display field 1301, a designated (or already registered) delivery place indication, and accumulated points (9,999 pt in this diagram) are displayed. A search field 1302 is displayed below the display field 1301.

The display switch field 1304 is an interface for switching displaying/not displaying the unpurchasable goods. In the diagram, a check field 13041 is checked to achieve setting for not displaying the unpurchasable goods. The goods list extracted in this case is analogous to that before improvement.

Below the display switch field 1304, the slider interface 1305 allowing the designation of the deliverable time to be changed is displayed. A knob 13051 of this interface is configured to be capable of changing a designation condition through a direct operation with a finger of the user or the like. On the slider interface 1305, the knob 13051 is at the position "(within) 1 hour" and serves as an interface for designation of narrowing down to the goods deliverable within one hour.

In a search result display field 1306 in Figure 13, a result of narrowing down according to the various conditions described above is displayed as a list of hit goods. In this diagram, the designated time is "(within) 1 hour". Accordingly, the goods matching such a deliverable time (within 1 hour) are displayed in rectangular regions. In an upper left part of the rectangular region for each item of goods, a check button interface allowing switching between selected and not selected through a tap or the like is displayed. For example, a check button 13061 is for switching between states of the search results of the goods A being selected or not selected. The selected goods can be added to a cart icon, described later, individually or collectively through a direct operation, not shown (for example, a flick operation or a drag operation).

This diagram shows that the goods A and goods D among the goods A to I displayed in the search result display field 1306 are deliverable "within 30 min.".

Furthermore, in this diagram, a pressable cart icon 13062 is also displayed. The function is analogous to that of the cart icon 9052. Results that cannot be displayed in the search result display field 1306 can be viewed through an operation to a scroll bar or the like, not shown.

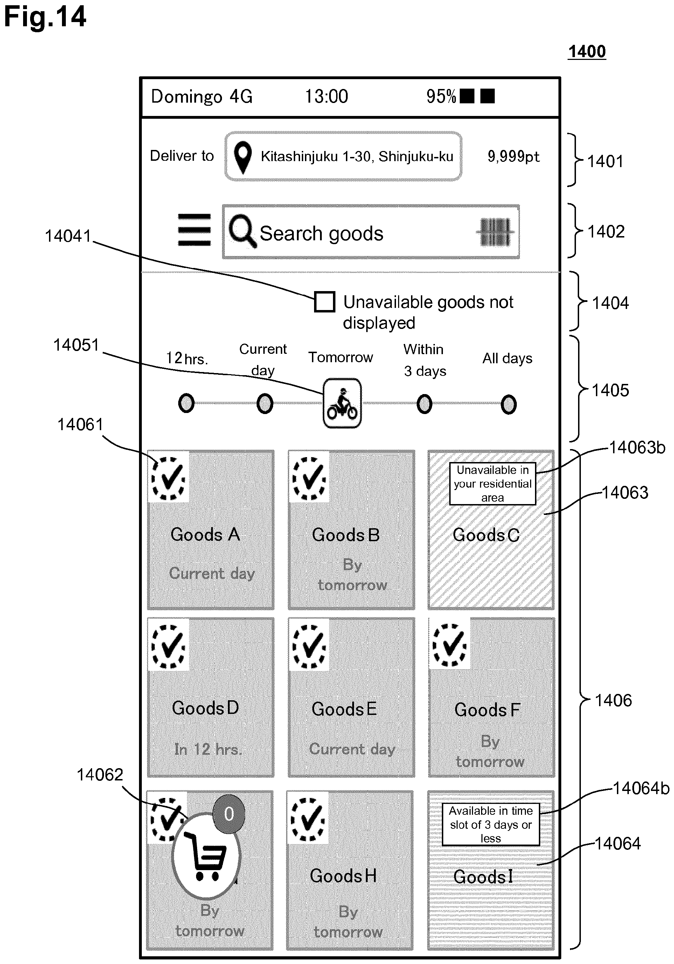

Figure 14 shows a display example in a case where the setting of the display switch field 1304 in Figure 13 is setting of displaying the unpurchasable goods. Although the search conditions are different in some points, the screen example shown in Figure 13 and the screen example shown in Figure 14 are screen examples implemented based on analogous functions. Reference numerals 1301 to 1302, 1304 to 1306, 13041, 13051, 13061 and 13062 in Figure 13 correspond to reference numerals 1401 to 1402, 1404 to 1406, 14041, 14051, 14061 and 14062 in Figure 14, respectively.

The search condition in the screen example shown in Figure 14 is different from the search condition in the screen example shown in Figure 13 in that the setting in the display switch field 1404 is changed to setting of displaying the unpurchasable goods, and the designated time in the slider operation field 1405 is designated as by "tomorrow".

As a result, in the search result display field 1406, the group of goods deliverable within the time period designated through the slider interface (the goods A, B, D, E, F, G and H in Figure 14) is displayed, and the goods (goods C) undeliverable to the user area and the goods (goods I) undeliverable within the designated time period are also displayed according to a predetermined display method.

Specifically, the goods C in the search result display field 1406 is subjected to shaded display or a transparent process 14063 as goods undeliverable to the user area, and indication of this situation ("Unavailable in your residential area") 14063b is displayed. The specific examples of the goods C include those in a case of falling into the "specific-area-limited goods" described above, and those in a case of falling into alcoholic goods with the sales license having not been obtained yet for the user area.

The user to whom the goods C are presented can change the delivery place in the display field 1401 to another deliverable place through a predetermined operation, not shown, cancel the shaded display or the transparent process 14063 (in this case, a check button allowing the goods I to be selected may be displayed), select the goods and add the goods into the cart 14062.

The goods I in the search result display field 1406 is subjected to shaded display or a transparent process 14064 as goods undeliverable within the designated time period, and indication of this situation ("Available in time slot of 3 days or less") 14064b is displayed. A specific example of the goods I is the goods in a case where stocks are present in a remote "nearby base". If the user to whom the goods I are presented is interested even without complete match with the original search condition, the user can cancel the shaded display or the transparent process 14064 through a predetermined operation, not shown, (in this case, a check button allowing the goods I to be selected may be displayed), select the goods and add the goods into the cart 14062.

### [(2) Narrowing down based on user location and/or user-designated area (originating place)]

### (Unpurchasable goods displaying/not-displaying function)

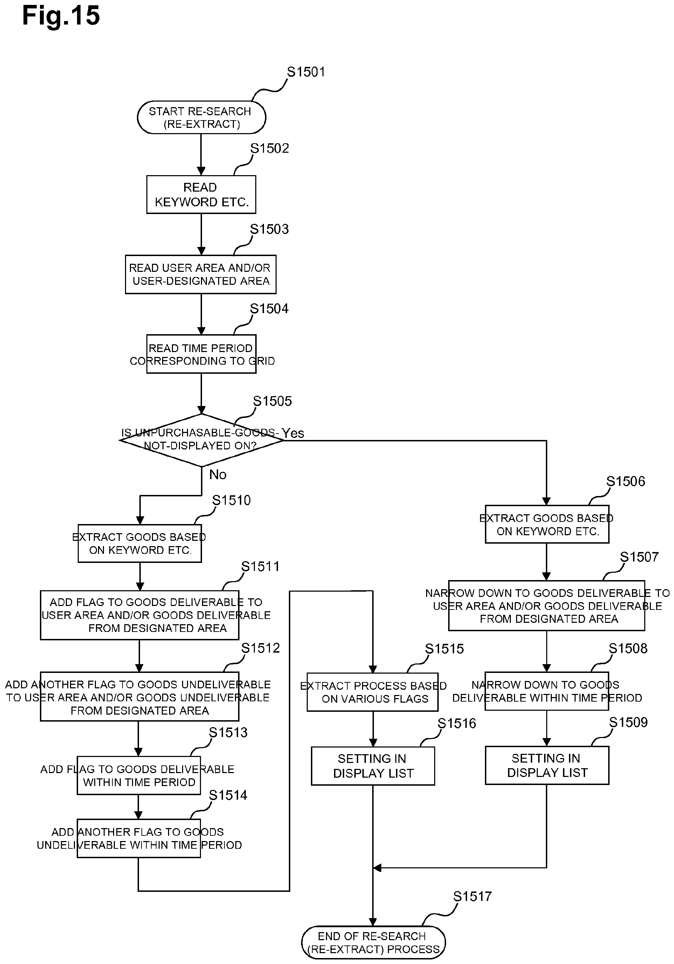

Figure 15 illustrates a processing operation flow of the information processing apparatus (user or customer terminal) or the like in a goods shipment management system according to still another embodiment of the present invention. Here, in addition to the goods search (goods narrowing down) through the slider interface described with reference to Figures 9 to 11, the following points are further improved.

### (Improvement 2-1)

In addition to the display of the list of goods deliverable within a time period designated through the slider interface, goods undeliverable within the designated time period are also displayed according to a predetermined display method (i.e., in a display mode allowing discrimination from the goods deliverable within the designated time period).

### (Improvement 2-2)

Goods that are deliverable physically within the time period designated through the slider interface but are unavailable in the user area are also displayed according to a predetermined display method (i.e., in a display mode allowing discrimination from the goods deliverable within the designated time period).

### (Improvement 2-3)

Irrespective of whether delivery can be made within the time period designated through the slider interface or not, goods available in areas other than the user-designated area are also displayed according to the predetermined display method (i.e., in a display mode allowing discrimination from the goods deliverable within the designated time period) if other conditions are satisfied.

### (Improvement. 2-4)

Provided that goods newly displayed according to the improvements 2-1 to 2-3 are defined as "unpurchasable goods", the user is allowed to switch whether to display the unpurchasable goods or not to display these goods (the mode before improvement) according to the user's selection.

As described above, advantages of displaying even goods undeliverable within the time period designated through the slider interface, with a specific decoration (shaded display or the like) being applied, and of displaying even goods that are unavailable in the user area or the designated area, according to a predetermined display method (with a specific image decoration, such as shaded display) being applied, are as follows.

First, the user is notified that delivery within the designated time period cannot be performed but stocks are secured in another store, a base in another area or the like, with a specific message being accompanied, for example, the goods are displayed accompanied by a message "available with a delivery time slot within 120 minutes" or the like in a case where the goods deliverable within 120 minutes are available even though the designated time is within 60 minutes, thereby allowing a latent demand having not been detected by the search method or the like before improvement to be captured because there is a high possibility that a user who thinks that he/she can wait further for an extra hour purchases the goods.

If there are stocks of goods that are unavailable in the user area or the designated area, these goods may be displayed accompanied by, for example, a message "Unavailable in your residential area" or a message "Unavailable in designated area"; accordingly, limited goods, indigenous products or the like available in a remote place or the like are possibly purchased even with concessions to the delivery time or the like. In this case, the latent demand having not been detected by the search method or the like before improvement can be captured.

As to situations of occurrence of goods unavailable in the user area or the designated area, the following situations are assumed. (a) Since the goods are goods limited to a specific area or goods indigenous to an area, the goods are unavailable in the nearby base or the designated area. Additionally, (b) since selling alcohol as goods requires an alcohol sales license for each sales area, the goods cannot be sold to areas for which the license has not been obtained.

An operation flow example for specific execution of the above technical concept is described in detail with reference to Figure 15. The flow is not limited to the flow shown in Figure 15. The flow can be regarded as a variation of a re-extraction (re-search) process in step S1158 shown in Figure 11.

In Figure 15, after the re-search (re-extraction) process is started (step S1501), the processing proceeds to step S1502, in which if there is a keyword or the like input in the search field (e.g., 902), the keyword or the like is read.

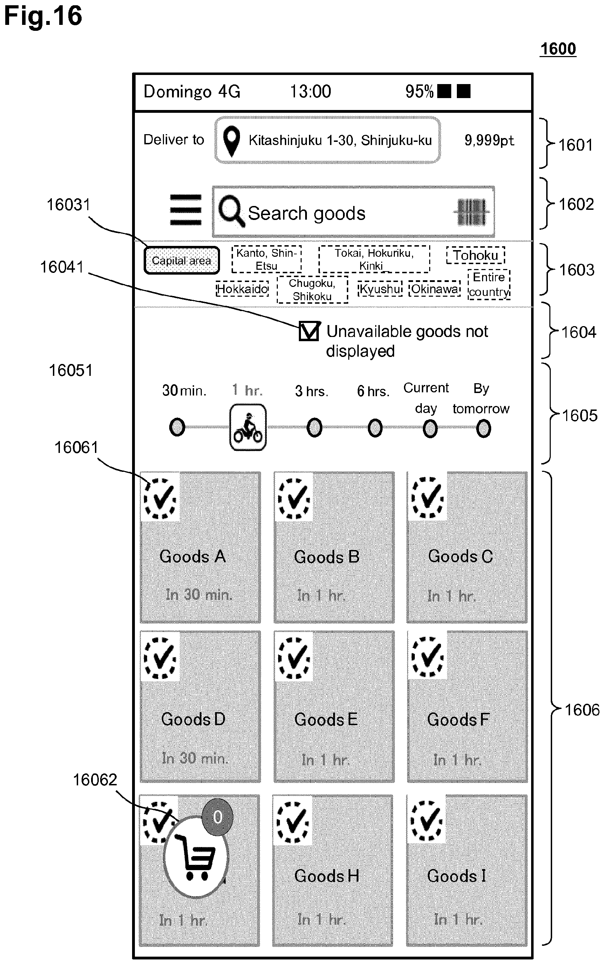

Next, the processing proceeds to step S1503, in which the user's or customer's location (user area) and the area designated by the user (user-designated area) are read. Typically, the delivery place information indicated in the display field (e.g., 901) is used as the user area. The user-designated area is an area designated by the user to designate the production area of the goods or the like (reference numerals 1603 and 1703 described later with reference to Figures 16 to 17 correspond thereto).

Next, the processing proceeds to step S1504, in which the time (e.g., the delivery time period of 10, 20, 30, 60 minutes, ..., or the like in Figure 10(A) to (C)) corresponding to the grid designated by a knob in the slider interface is read.

Each of steps S1502 to S1504 can be individually skipped if the values (the keyword, the designated area, time, etc.) designated in the last process are unchanged at the start of the re-search (re-extraction) process.

Next, the processing proceeds to step S1505, in which it is determined whether the "unpurchasable goods" is set to be displayed, or set not to be displayed. In one embodiment of the present invention, the setting is switchable by the user (specifically, reference numerals 1704 and 1704 to be described later with reference to Figures 16 to 17 correspond thereto). In this flow, the determination is made according to whether the "unpurchasable goods not-displaying" setting is "ON" or "OFF".

If the setting is "ON" (Yes) in step S1505, the processing proceeds to step S1506 in order to perform normal display that does not display the "unpurchasable goods", and first, in this step, a goods extraction process with a keyword or the like is performed.

Next, the processing proceeds to step S1507, in which goods are narrowed down to goods deliverable to the user area and/or goods deliverable from the designated area.

The processing then proceeds to step S1508, in which the goods are narrowed down to goods deliverable within the time period designated through the slider interface. The deliverable time on an item-by-item basis can be referred to as needed, by managing, by recalculating in each case, and by applying update control to the number of stocked goods at each base, the delivery time between bases, and the delivery time to the customer residence on the core system (or the management server).

Next, the processing proceeds to step S1509, in which the goods list as a result of the re-search (re-extraction) process is set in the display memory, and the re-search (re-extraction) process is finished (step S1517). Note that the process order of steps S1507 to S1508 is allowed to be appropriately changed.

On the contrary, if the setting is "OFF" (No) in step S1505, the processing proceeds to step S1510 in order to display also "unpurchasable goods", and first, in this step, a goods extraction process with a keyword or the like is performed.

Next, the processing proceeds to step S1511, in which the goods deliverable to the user area and/or the goods deliverable from the designated area are extracted, and a specific flag E is added to the extracted goods. Next, the processing proceeds to step S1512, in which a flag F, which is different from the specific flag E described above, is added to the goods undeliverable to the user area and/or the goods undeliverable from the designated area.

The processing then proceeds to step S1513, in which the goods deliverable within the time period designated through the slider interface are extracted, and a specific flag G is added to the extracted goods. Next, the processing proceeds to step S1514, in which a flag H, which is different from the specific flag G described above, is added to the goods undeliverable within the designated time period.

Note that the number of types of each of the flags E to H is not necessarily limited to one. For example, the flag F and the flag H may each include multiple types of flags. The process order of steps S1511 and S1512, and the process order of steps S1513 and S1514 may be appropriately changed.

As a specific example, an extraction process example is described where the keyword is "sake", the user area (user location) is "Shinjuku-ku, Tokyo", the user-designated area is "Kanto, Shin-Etsu" and "Tokai, Hokuriku, Kinki", and the designated delivery time is "By tomorrow". First, in step S1510, it is assumed that 10,000 items of goods extracted with the keyword "*Junmai Daiginjo*" are hit. In step S1511, a flag "0" (indicating that the goods match the original condition) is added to each of (9,900 items of) goods deliverable to the user area and (1,300 items of) goods deliverable from the user-designated area. In S1512, a flag "1" is added to (100 items of) goods undeliverable to the user area, and a flag "one or more" is added to (8,700 items of) goods undeliverable from the user-designated area according to the distance from the area. An example is as follows. A flag "1" is added to areas "Tohoku" and "Chugoku, Shikoku", which are near to the user-designated area "Kanto, Shin-Etsu" and "Tokai, Hokuriku, Kinki". A flag "2" is added to farther areas "Hokkaido" and "Kyushu". A flag "3" is added to a much farther area "Okinawa".

Next, the processing proceeds to step S1513, in which a flag "0" (indicating that the goods match the original condition) is added to goods deliverable within the time period designated through the slider interface. In step S1514, a flag "one or more" according to the time length is added to the goods undeliverable within the designated time period. For example, a flag "1" is added to the goods deliverable within three days, and a flag "2" is added to the goods deliverable within five days.

For example, the goods subjected to the flag process as described above is managed according to the following table (this table is appropriately created by a function, such as of a relational database).

**[Table 2]**

| | | | | |
|---|---|---|---|---|
| Goods No. | Keyword | Delivery to user area | Designated area | Delivery within designated time |

In the above table, a "Goods No." column stores a management number of the goods hit for the keyword (accompanying information, such as the goods name, manufacturer, and price, can be appropriately extracted as required) . A "Keyword" column stores a result of match/unmatch for the user-designated keyword (although not specifically described in this embodiment, discrimination between perfect match, partial match, match as a synonym can be reflected). A "Delivery to user area" column stores a flag pertaining to deliverability to the user area (location). A "Designated area" column stores a flag of whether the goods are deliverable from the user-designated area or not. A "Delivery within designated time" column stores a flag pertaining to deliverability within the predetermined time.

Next, the processing proceeds to step S1515, in which an extraction process based on various flags added to the extracted goods.

That is, the process is a narrowing-down process of determining the extent to which unmatched goods are displayed, in addition to the goods matching the original search condition. For example, in a case where the search condition is within "1 hr.", it is determined, according to a predetermined condition, whether to display the goods deliverable within "3 hrs." or not, and whether to display the goods deliverable within "6 hrs." in addition to the goods deliverable within "3 hrs." or not. Likewise, in a case where the user-designated area is designated as "Capital area" for the search condition, it is determined whether to display also goods that can be shipped from "Kanto, Shin-Etsu" areas or not, and whether to display also goods that can be shipped from "Tohoku" area in addition to the goods that can be shipped from "Kanto, Shin-Etsu" areas, on the basis of a predetermined condition.

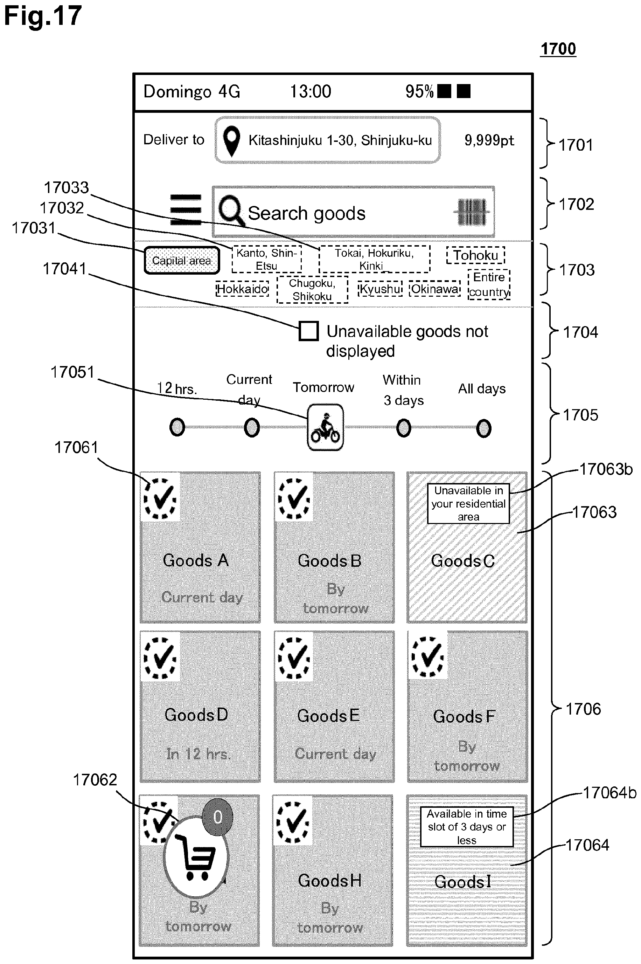

The "predetermined condition" can be set in various views. The simplest setting is a scheme of including the adjacent condition. Specifically, the scheme may be a process of including "3 hrs." (Figure 16), which is an adjacent time grid, in a case where "1 hr." is designated, or a process of including "Kanto, Shin-Etsu" (Figures 16 and 17), which are adjacent areas, in a case where "Capital area" is designated as the designated area.

Alternatively, referring to the sales performance, a determination reference that extracts the goods (leaves the goods to the list presented to the user) even with the delivery time period and the designated area that largely deviate to some extent if the goods sell well (popular goods) may be adopted. Data collected and accumulated in the data warehouse for analysis, which has already been described, may be analyzed to find various relationships, thereby allowing such a condition to be set or changed.

Next, the processing proceeds to step S1516, in which the goods list as a result of the re-search (re-extraction) process is set in the display memory, and the re-search (re-extraction) process is finished (step S1517).

Next, referring to Figures 16 to 17, a goods narrowing-down operation and display variations in the user terminal according to another embodiment of the present invention are described.

Figure 16 shows the variation of designating one or more areas and performing the goods narrowing-down operation. In this diagram, in a display field 1601, a designated (or already registered) delivery place indication, and accumulated points (9,999 pt in this diagram) are displayed. A search field 1602 and an area designation field 1603 are displayed below the display field 1601. As shown in this diagram, when a "Capital area" button 16031 in the area designation field 1603 is pressed, the Capital area is adopted as the designated area, and the goods deliverable from the Capital area are adopted as search targets. Goods can be narrowed down by inputting a search keyword into the search field 1602.

The display switch field 1604 is an interface for switching displaying/not displaying the unpurchasable goods. In the diagram, a check field 16041 is checked to achieve setting for not displaying the unpurchasable goods. The goods list extracted in this case is analogous to that before improvement.

Below the display switch field 1604, the slider interface 1605 allowing the designation of the deliverable time to be changed is displayed. A knob 16051 of this interface is configured to be capable of changing a designation condition through a direct operation with a finger of the user or the like. On the slider interface 1605, the knob 16051 is at the position "(within) 1 hour" and serves as an interface for designation of narrowing down to the goods deliverable within one hour.

In a search result display field 1606 in Figure 16, a result of narrowing down according to the various conditions described above is displayed as a list of hit goods. In this diagram, the user-designated area is "Capital area". Accordingly, the goods matching what are deliverable from the Capital area and with a deliverable time (within 1 hour) are displayed in rectangular regions. In an upper left part of the rectangular region for each item of goods, a check button interface allowing switching between selected and not selected through a tap or the like is displayed. For example, a check button 16061 is for switching between states of the search results of the goods A being selected or not selected. The selected goods can be added to a cart icon, described later, individually or collectively through a direct operation, not shown (for example, a flick operation or a drag operation).

This diagram shows that the goods A and goods D among the goods A to I displayed in the search result display field 1606 are deliverable "within 30 min.".

Furthermore, in this diagram, a pressable cart icon 16062 is also displayed. The function is analogous to that of the cart icon 9052. Results that cannot be displayed in the search result display field 1606 can be viewed through an operation to a scroll bar or the like, not shown.

Figure 17 shows a display example in a case where the setting of the display switch field 1604 in Figure 16 is setting of displaying the unpurchasable goods. Although the search conditions are different in some points, the screen example shown in Figure 16 and the screen example shown in Figure 17 are screen examples implemented based on analogous functions. Reference numerals 1601 to 1606, 16041, 16051, 16061 and 16062 in Figure 16 correspond to reference numerals 1701 to 1706, 17041, 17051, 17061 and 17062 in Figure 17, respectively.

The search condition in the screen example shown in Figure 17 is different from the search condition in the screen example shown in Figure 16 in that the area designation in the area designation field 1703 is designated as "Capital area" 17031, "Kanto, Shin-Etsu" 17032 and "Tokai, Hokuriku, Kinki" 17033, the setting in the display switch field 1704 is changed to setting of displaying the unpurchasable goods, and the designated time in the slider operation field 1705 is designated as by "tomorrow".

As a result, in the search result display field 1706, the group of goods deliverable from the designated area and the group of goods deliverable within the time period designated through the slider interface (the goods A, B, D, E, F, G and H in Figure 17) are displayed, and the goods (goods C) undeliverable from the designated area and the goods (goods I) undeliverable within the designated time period are also displayed according to a predetermined display method.

Specifically, the goods C in the search result display field 1706 is subjected to shaded display or a transparent process 17063 as goods undeliverable from the designated area, and indication of this situation ("Unavailable from designated area") 17063b is displayed. A specific example of the goods C is a case of presence of a highly popular *Junmai Daiginjo* brewed in Iwate Prefecture in Tohoku. If the user to whom the goods C are presented is interested even without complete match with the original search condition, the user can cancel the shaded display or the transparent process 17063 through a predetermined operation, not shown, (in this case, a check button allowing the goods C to be selected may be displayed), select the goods and add the goods into the cart 17062.

The goods I in the search result display field 1706 is subjected to shaded display or a transparent process 17064 as goods undeliverable within the designated time period, and indication of this situation ("Available in time slot of 3 days or less") 17064b is displayed. A specific example of the goods I is a case of presence of a highly popular *Junmai Daiginjo* brewed in Hiroshima Prefecture in Chugoku-Shikoku. If the user to whom the goods I are presented is interested even without complete match with the original search condition, the user can cancel the shaded display or the transparent process 17064 through a predetermined operation, not shown, (in this case, a check button allowing the goods I to be selected may be displayed), select the goods and add the goods into the cart 17062.

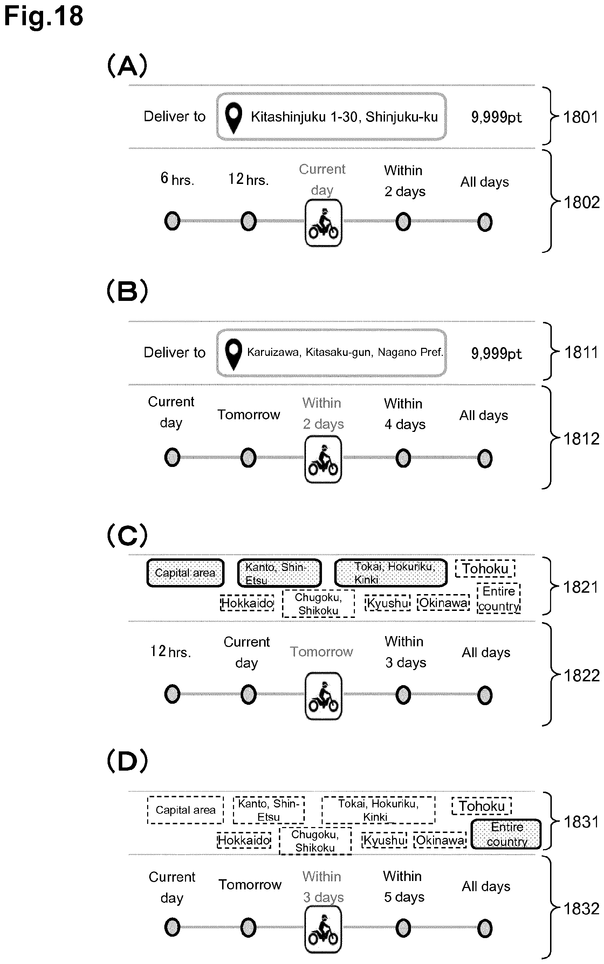

Figure 18 illustrates an operation and a display example for the information processing apparatus (user or customer terminal) in the goods shipment management system according to the other embodiment of the present invention. Figure 18(A) and Figure 18(B) show situations where the time indication (temporal scale) on the slider interface (1802, 1812) is changed according to the difference in user area (1801, 1811). Figure 18(C) and Figure 18(D) show situations where the time indication (temporal scale) on the slider interface (1822, 1832) is changed according to variation in designated area (1821, 1831) .

That is, in a case where the delivery base is assumed to be the Capital area and the user location (user area) 1801 is "Shinjuku, Tokyo", as shown in Figure 18(A), the time indication displayed on the slider interface 1802 is relatively short periods, which are "6 hrs.", "12 hrs.", "Current day", "Within 2 days" and "All days". In Figure 18 (D), the user area is "Karuizawa, Kitasaku-gun, Nagano Pref.". Accordingly, in consideration of delivery to the remote place from the Capital area, which is the delivery base, the time indication displayed on the slider interface 1812 is changed to "Current day," "Tomorrow," "Within 2 days," "Within 4 days" and "All days" in consideration of relatively long periods.

The user location is assumed to be the common location, which is "Shinjuku, Tokyo". In Figure 18(C), the designated area is "Capital area," "Kanto, Shin-Etsu," and "Tokai, Hokuriku, Kinki". Accordingly, the time indication displayed on the slider interface 1822 is relatively short periods, which are "12 hrs.", "Current day", "Tomorrow", "Within 3 days" and "All days". In Figure 18(D), the designated area is "Entire country". Accordingly, in consideration of delivery from a remote place to Tokyo, the time indication displayed on the slider interface 1832 is changed to "Current day", "Tomorrow", "Within 3 days", "Within 5 days" and "All days" in consideration of relatively long periods.

As described above, the goods search method and the like according to one embodiment of the present invention can adopt a flexible interface.

Based on the specific examples, the embodiments of the goods search method and the like have thus been described above. Alternatively, the embodiments of the present invention may be exemplary embodiments not only of a method or a program for executing the system or the apparatus but also of a storage medium storing the program (e.g., an optical disk, a magnetooptical disk, a CD-ROM, a CD-R, a CD-RW, a magnetic tape, a hard disk, a memory card) and the like.

The embodiments of the program are not limited to application programs, such as object code to be complied by a compiler, and program code to be executed by an interpreter, but may be an embodiment of a program module to be implemented in an operating system.

Not all the processes of the program are necessarily executed on the CPU on a control board. Alternatively, a configuration may be adopted where some or all of the processes are executed by another processing unit (DPS or the like) implemented on an extension board added to the board or on an extension unit, as required.

All the constituent elements described in this Specification (including the scope of claims, the abstract and the drawings) and/or all the steps of all the methods or processes disclosed therein can be combined to achieve any of the combinations excluding mutually exclusive combinations.

The characteristics described in this Specification (including the scope of claims, the abstract and the drawings) can each be replaced with alternative characteristics operating for the same object, equivalent objects, or similar objects, unless clearly denied. Consequently, unless clearly denied, each of the disclosed characteristics is only an example of a comprehensive series of the same or equivalent characteristics.

Furthermore, the present invention is not limited to any of the specific configurations of the embodiments described above. The present invention is broadly applicable to all the novel characteristics described in this Specification (including the scope of claims, the abstract and the drawings) or combinations thereof, or all the aforementioned novel methods or processing steps, or combinations thereof.

### Reference Signs List

10 goods shipment management system that executes a goods search method and the like (as a part of a distribution system)
11 to 13 Distribution center
14 to 16 Nearby base
141 to 142, 151 to 153, 162 to 165, 199 Customer residence
20 goods shipment management system that executes a goods search method and the like
21 Management server
22 Tablet terminal (a mode of user terminal apparatus)
23 Mobile phone (a mode of user terminal apparatus)
24 to 26 PC (a mode of user terminal apparatus or base terminal)
27 to 28 POS terminal (a mode of base terminal or delivery mobile terminal)
37, 38 Communication line
39 Public line (dedicated line, Internet, etc.)

## Claims

1. A computer program to be executed, for searching for goods, in a goods shipment management system comprising: a management server that manages, on an item-by-item basis, a goods shipment time period to a customer residence from one or more nearby bases based in a predetermined area allowing delivery to the customer residence within a predetermined time period; and a customer terminal in the customer residence, wherein upon execution on the system, the program executes:
a step of providing the customer terminal with a user interface that includes a plurality of goods shipment time periods as scale marks;
a step of allowing the customer terminal to designate one of the goods shipment time periods, through the user interface;
a step of allowing the customer terminal to request the management server to search for goods that can be shipped within the designated goods shipment time period; and
a step of causing the management server to execute the search and to extract the goods that can be shipped within the designated goods shipment time period and goods that cannot be shipped within the designated goods shipment time period in a manner discriminated from each other.

2. The program according to claim 1,
wherein the user interface is a slider interface including a knob that a user can directly operate, and
when the knob on the slider interface is directly operated to change a position of the knob to change the scale mark accordingly, the customer terminal is allowed to request the management server to re-search, based on the goods shipment time period on the changed scale mark.

3. The program according to claim 2,
wherein besides the search based on the goods shipment time period designated through the slider interface, the search includes a narrowing-down search based on at least one of:
(A) a character string search related to the goods; and
(B) a location of the user.

4. The program according to claim 2,
wherein besides the search based on the goods shipment time period designated through the slider interface, the search includes a narrowing-down search based on a location of the user or the user's designated area, and
the search discriminates the goods that can be shipped to the location of the user, and the goods that cannot be shipped to the location of the user, from each other, when the search includes the narrowing-down search based on the location of the user, and
extracts the goods concerned.

5. A method for searching for goods, in a goods shipment management system comprising: a management server that manages, on an item-by-item basis, a goods shipment time period to a customer residence from one or more nearby bases based in a predetermined area allowing delivery to the customer residence within a predetermined time period; and a customer terminal in the customer residence, the method executing:
a step of providing the customer terminal with a user interface that includes a plurality of goods shipment time periods as scale marks;
a step of allowing the customer terminal to designate one of the goods shipment time periods, through the user interface;
a step of allowing the customer terminal to request the management server to search for goods that can be shipped within the designated goods shipment time period; and
a step of causing the management server to execute the search and to extract the goods that can be shipped within the designated goods shipment time period and goods that cannot be shipped within the designated goods shipment time period in a manner discriminated from each other.

6. The method according to claim 5,
wherein the user interface is a slider interface including a knob that a user can directly operate, and
when the knob on the slider interface is directly operated to change a position of the knob to change the scale mark accordingly, the customer terminal is allowed to request the management server to re-search, based on the goods shipment time period on the changed scale mark.

7. The method according to claim 6,
wherein besides the search based on the goods shipment time period designated through the slider interface, the search includes a narrowing-down search based on at least one of:
(A) a character string search related to the goods; and
(B) a location of the user.

8. The method according to claim 6,
wherein besides the search based on the goods shipment time period designated through the slider interface, the search includes a narrowing-down search based on a location of the user or the user's designated area, and
the search discriminates the goods that can be shipped to the location of the user, and the goods that cannot be shipped to the location of the user, from each other, when the search includes the narrowing-down search based on the location of the user, and
extracts the goods concerned.
